# EUROPEAN PATENT SPECIFICATION

(11) **EP 0 701 921 B1**
(45) Date of publication and mention of the grant of the patent: **23.07.1997**
(21) Application number: 94830429.0
(22) Date of filing: 14.09.1994
(51) Int. Cl.: B60N 2/48

(54) **Headrest frame for motor vehicle seats.**
Kopfstützerahmen für Kraftfahrzeugsitze
Armature d'appui-tête pour sièges de véhicules automobiles

(43) Date of publication of application: 20.03.1996
(73) Proprietor: GESTIND-M.B." MANIFATTURA DI BRUZOLO" S.P.A, I-10050 Bruzolo (Torino) (IT)
(72) Inventor: De Filippo, Emilio, I-10050 Bruzolo (Torino) (IT)
(74) Representative: Buzzi, Franco

(56) References cited:
- EP-A- 0 322 374
- EP-A- 0 603 136
- DE-A- 3 018 927
- DE-A- 3 036 443
- DE-A- 3 413 453
- DE-U- 8 812 508
- FR-A- 2 577 869

## Description

The present invention is generally related to headrests for motor vehicle seats and refers more particularly to a headrest frame comprising a body having a generally annular shape formed by a single piece of moulded plastic material with an upper transverse element, a lower transverse element and a pair of lateral hollow uprights.

Headrest frames of the above-referenced type are known, for instance, from EP-A-0322374 and EP-A-0603136, in the name of the same Applicant. In these known frameworks the two lateral uprights of the body slidably house a pair of adjustable rods supporting at a variable height the headrest relative to the backrest of a motor vehicle seat.

The object of the present invention is to provide a headrest frame of the above-mentioned type having a sturdy but at the same time light structure, which is simple and cheap to manufacture and adapted, in use, to perform support of the headrest relative to the seat backrest firmly and without vibrations.

A headrest of similar configuration is also known from DE-A-3 036 443; in this case, however, the headrest frame is formed by a metal bow fitted within the foam headrest padding and further comprising a deformable reinforcement piece made of a cord or a plastic band which extends within cross member/s of said padding and is connected to the frame metal bow.

According to the invention, the above-mentioned object is achieved by virtue of a headrest frame of the above-referenced type, characterised in that:
- an integral intermediate transverse element interconnects the two lateral uprights between said upper and lower transverse elements,
- said lateral uprights project beneath the lower transverse element and rigidly incorporate a pair of respective metal cores over which said lateral uprights are moulded,
- said metal cores project beneath the respective lateral uprights and define a pair of rigid support rods of the headrest relative to a seat backrest.

According to a preferred embodiment of the invention, said metal support rods are housed within respective plastic material hollow members moulded over the support rods in one piece with and on the prolongation of said tubular uprights, said plastic material hollow members being formed with integral means performing in use the vertical restraint of the headrest onto a seat backrest.

To the aim of giving to the frame a high rigidity and structural strength even in the area deprived of the said metal cores, said upper and lower transverse element have a substantially omega-shaped cross section with smooth bending radiuses, and said intermediate transverse element has a substantially C-shaped cross section.

The invention will now be disclosed in detail with reference to the annexed drawings, purely provided by way of non limiting example, in which:

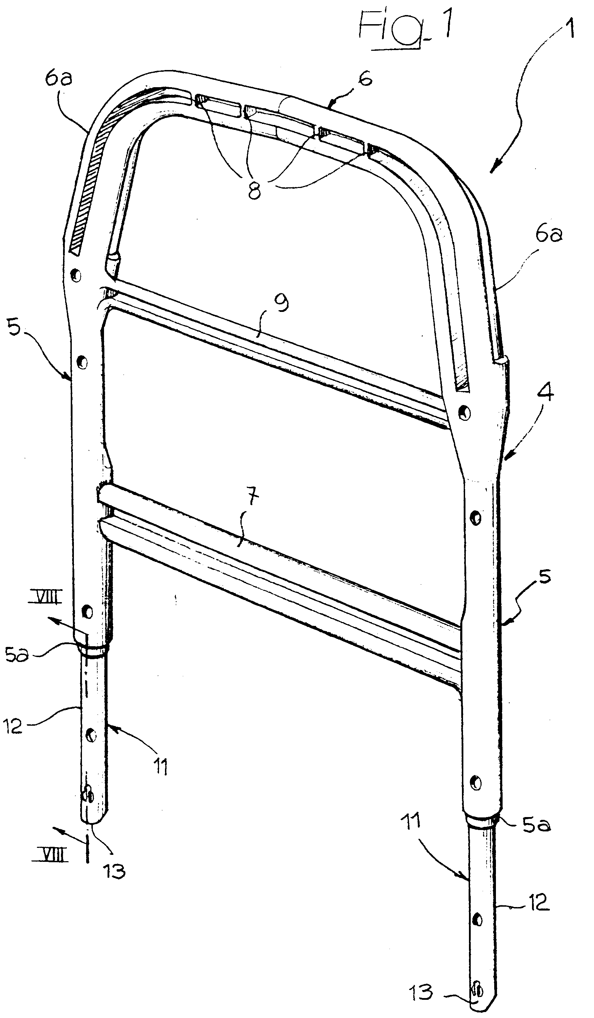

figure 1 is a diagrammatic perspective view of a headrest frame according to the invention,

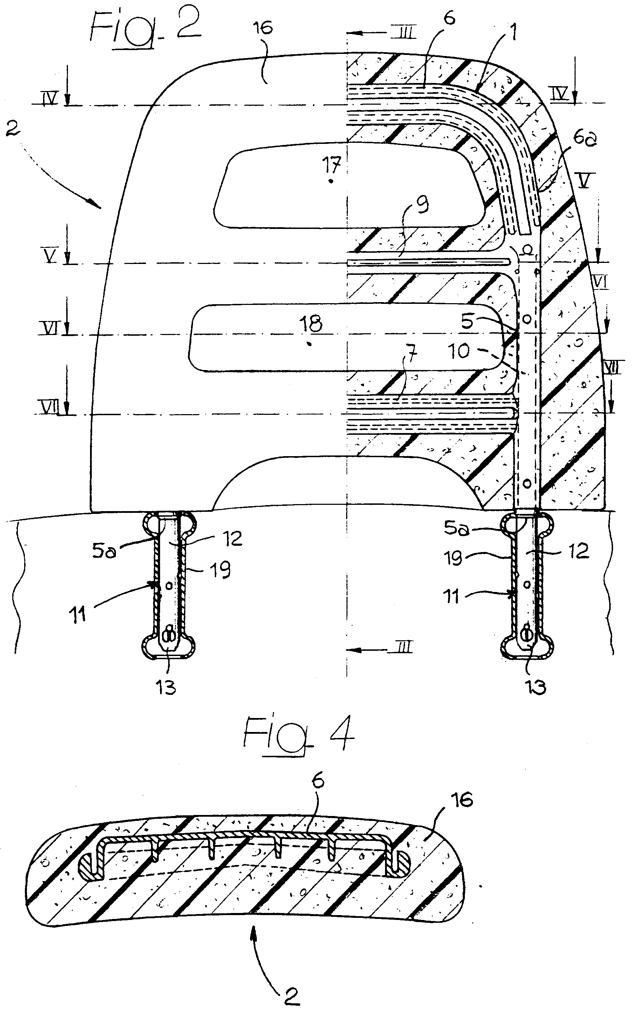

figure 2 is a front elevational and partially sectioned view showing the frame of figure 2 incorporated within a headrest applied to a motor vehicle seat,
figure 3 is a vertical section along line III-III of figure 2,

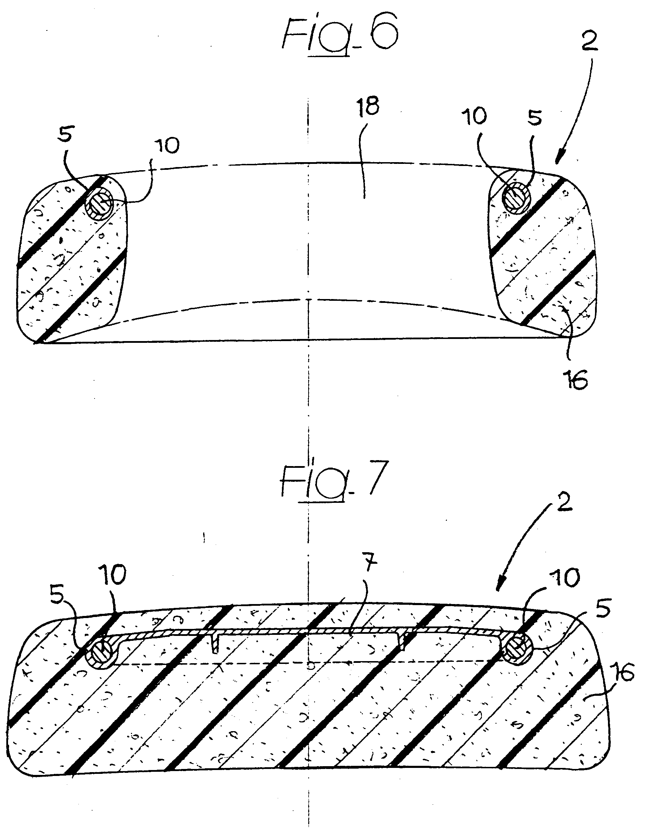

figure 4 is a horizontal section along line IV-IV of figure 2,
figure 5 is a horizontal section along line V-V of figure 2,
figure 6 is a horizontal section along line VI-VI of figure 2,
figure 7 is a horizontal section along line VII-VII of figure 2 and
figure 8 is a vertical section in an enlarged scale along line VIII-VIII of figure 1.

Referring to the drawings, reference 1 designates a frame according to the invention for a headrest, generally shown as 2, intended to be positioned on top of the backrest 3 of a motor vehicle seat.

The frame 1 is constituted by a one-piece body 4 of moulded plastic material formed with two lateral uprights 5 interconnected by an upper transverse element 6 and by a lower transverse element 7.

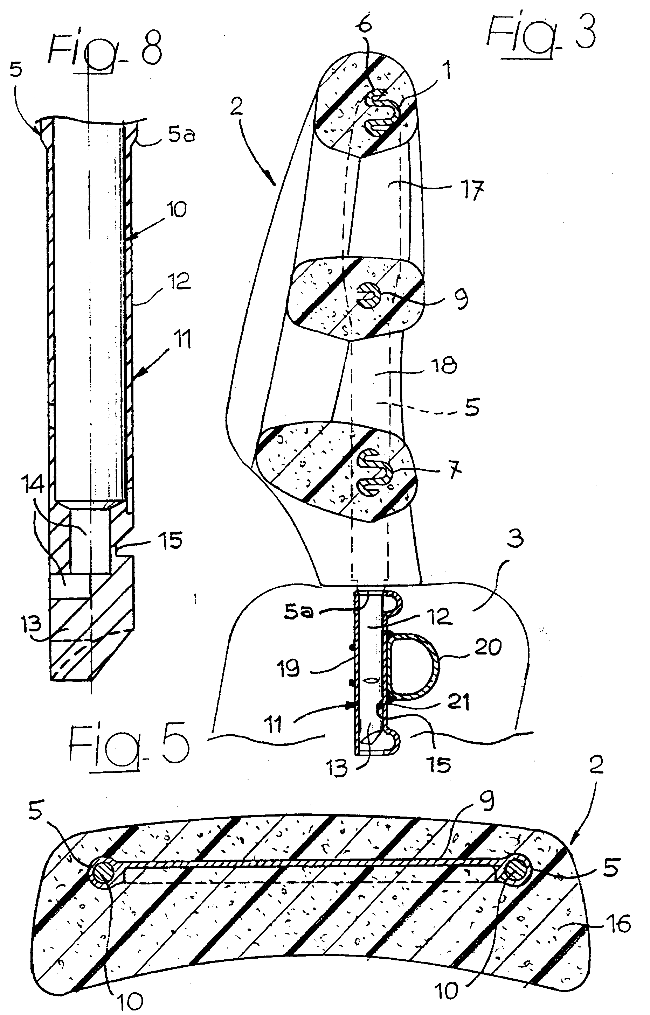

As it is shown in detail in figure 3, the upper transverse element 6 has a substantially omega-shaped cross section, with smooth bending radiuses and intermediate stiffening ribs 8, and is connected through angled end portions 6a to the upper ends of the lateral uprights 5. Also the lower transverse element 7 has a similar omega-shaped cross section with smooth bending radiuses.

Reference 9 designates a further intermediate transverse element, which is moulded in one piece with the body 4 and interconnects the two lateral uprights 5 at the base of the end portions 6a. The intermediate transverse element 9 has a C-shaped cross section.

Starting from the respective connecting areas to the intermediate transverse element 9, the two lateral uprights 5 have a hollow conformation so as to house therein respective metal cores 10 having a generally elongated cylindrical shape. The two metal cores 10 are rigidly fixed to the body 4 of the frame 1 by moulding thereover the respective lateral uprights 5.

These lateral uprights 5 project beneath the lower transverse element 7, and the two metal cores 10 are in turn projecting beneath the lower ends 5a of the two lateral uprights 5, thus defining a pair of rigid support rods 11 of the headrest 2 relative to the backrest 3 of the vehicle seat, in the way explained herebelow.

As it is shown in better detail in figure 8, each of the two support rods 11 is fitted within a respective plastic material hollow member 12 moulded thereover in one piece with the corresponding lateral upright 5, on the prolongation of the respective lower end 5a thereof. Each hollow member 12 has an end portion 13 protruding beyond the lower end of the corresponding support rod 11 and formed with axial-radial passages 14 deriving from the overmoulding process. Each end portion 13 is further formed with a rear notch 15 for the mounting and the restraint of the headrest 2 relative to the backrest 3, in the way clarified herebelow. According to a variant which is not illustrated, a plurality of vertically spaced-apart notches 15 may be provided, to the aim of possibly allowing vertical adjustment of the headrest 2 with respect to the backrest 3.

In use, the frame 1 is incorporated within a headrest cushion 16, normally made of foamed plastic material, formed with two apertures 17 and 18 the first one of which is framed by the upper transverse element 6 with the respective end portions 6a and by the intermediate transverse element 9, and the second one of which is framed by the intermediate transverse element 9, by the lower transverse element 7 and by the portions comprised therebetween of the two lateral uprights 5 with the respective metal cores 10.

The two support rods 11 with the respective plastic material hollow members 12 protrude beneath the base of the cushion 16 so as to fit within respective bushes 19 housed at the top of the backrest 13 and fixed to the framework 20 (figure 3) thereof. The two bushes 19 are provided, in a way generally known per se, with respective locking wire springs 21 for the restraint of the headrest 2, following engagement thereof relative to the notches 15 when the support rods 11 are fitted into the respective bushes 19. As previously pointed out, a vertical adjustment of the headrest 2 relative to the backrest 3 may also be provided, forming the ends 13 of the hollow members 12 with a plurality of notches 15 adapted to be selectively engaged by the corresponding wire springs 21.

Naturally the details of construction and the design of the frame 1 may be widely varied with respect to what has been disclosed and illustrated, without thereby departing from the scope of the present invention such as defined in the appended claims.

## Claims

1. Headrest frame (1) for motor vehicle seats comprising a body (4) having a generally annular shape formed by a single piece of moulded plastic material with an upper transverse element (6), a lower transverse element (7) and a pair of lateral hollow uprights (5), characterized in that:
- an integral intermediate transverse element (9) interconnects the two lateral uprights (5) between said upper and lower transverse elements (6, 7),
- said lateral uprights (5) project beneath the lower transverse element (7) and rigidly incorporate a pair of respective metal cores (10) over which said lateral uprights (5) are moulded,
- said metal cores (10) project beneath the respective lateral uprights (5) and define a pair of rigid support rods (11) of the headrest (2) relative to a seat backrest (3).

2. Headrest frame according to claim 1, characterized in that said metal support rods (11) are housed within respective plastic material hollow members (12) moulded over the support rods (11) in one piece with and on the prolongation of said tubular uprights (5), said plastic material hollow members (12) being formed with integral means (15) performing in use the vertical restraint of the headrest (2) onto a seat backrest (3).

3. Headrest frame according to claim 1 or claim 2, characterized in that said upper and lower transverse elements (6, 7) have a substantially omega-shaped transverse section with smooth bending radiuses, and said intermediate transverse element (9) has a substantially C-shaped cross section.

## Patentansprüche

1. Kopfstützenrahmen (1) für Kraftfahrzeugsitze, der einen Körper (4) mit einer im allgemeinen ringartigen Form umfaßt, der aus einem einzelnen Stück geformten Kunststoffmaterials mit einem oberen Querelement (6), einem unteren Querelement (7) und einem Paar seitlicher hohler Stützen (5) besteht, **dadurch gekennzeichnet,** daß
- ein integrales Zwischen-Querelement (9) die beiden seitlichen Stützen (5) zwischen dem oberen und dem unteren Querelement (6, 7) verbindet,
- die seitlichen Stützen (5) unter das untere Querelement (7) vorstehen und ein Paar entsprechender Metallkerne (10) starr einschließen, über die die seitlichen Stützen (5) geformt sind,
- die Metallkerne (10) unter die entsprechenden seitlichen Stützen (5) vorstehen und ein Paar starrer Haltestangen (11) für die Kopfstütze (2) in bezug auf eine Sitzlehne (3) bilden.

2. Kopfstützenrahmen nach Anspruch 1, **dadurch gekennzeichnet,** daß die Metallhaltestangen (11) in entsprechenden Kunststoffmaterial-Hohlelementen (12) aufgenommen sind, die als ein Stück mit den röhrenförmigen Stützen (5) und an ihrer Verlängerung über die Haltestangen (11) geformt sind, wobei die Kunststoffmaterial-Hohlelemente (12) mit integralen Einrichtungen (15) versehen sind, die in Funktion die Kopfstütze (2) vertikal auf einer Sitzlehne (3) halten.

3. Kopfstützenrahmen nach Anspruch 1 oder Anspruch 2, **dadurch gekennzeichnet,** daß das obere und das untere Querelement (6, 7) einen im wesentlichen Omega-förmigen Querschnitt mit sanften Biegeradien haben und das Zwischen-Querelement (9) einen im wesentlichen C-förmigen Querschnitt hat.

## Revendications

1. Armature d'appuie-tête (1) pour sièges de véhicules automobiles comprenant un corps (4) ayant une forme générale annulaire, formée d'une seule pièce en matière plastique moulée, comprenant un élément transversal supérieur (6), un élément transversal inférieur (7) et une paire de montants latéraux creux (5), caractérisée en ce que :
- un élément transversal intermédiaire (9) intégré relie les deux montants latéraux (5) entre lesdits éléments transversaux supérieur et inférieur (6, 7),
- lesdits montants latéraux (5) se prolongent au-dessous de l'élément transversal inférieur (7) et comprennent une paire de noyaux métalliques (10) respectifs qui y sont rigidement incorporés et par dessus lesquels lesdits montants latéraux (5) sont moulés,
- lesdits noyaux métalliques (10) se prolongent au-dessous des montants latéraux (5) respectifs et définissent une paire de tiges de support (11) donnant à l'appuie-tête (2) un appui rigide par rapport au dossier (3) du siège.

2. Armature d'appuie-tête selon la revendication 1, caractérisée en ce que lesdites tiges de support métalliques (11) sont logées dans des éléments creux respectifs (12) en matière plastique moulés sur les tiges de support (11) en une seule pièce avec les montants latéraux (5) et dans le prolongement de ces montants, lesdits éléments creux (12) étant munis de moyens (15) venus de matière qui assurent en utilisation la retenue verticale de l'appuie-tête (2) sur un dossier de siège (3).

3. Armature d'appuie-tête selon la revendication 1 ou la revendication 2, caractérisée en ce que lesdits éléments transversaux supérieur et inférieur (6, 7) ont une section transversale sensiblement en forme d'oméga possédant de grands rayons de courbure, et ledit élément transversal intermédiaire (9) a une section transversale sensiblement en forme de C.
